# FASCICULE DE BREVET EUROPEEN

(11) **EP 2 904 343 B1**
(45) Date de publication et mention de la délivrance du brevet: **24.08.2016**
(21) Numéro de dépôt: 13774643.4
(22) Date de dépôt: 07.10.2013
(51) Int. Cl.: F28D 20/02, F28F 21/08, F28F 1/20, F28F 1/22, F28F 1/36, F22B 1/02, F22B 1/00

(54) **ECHANGEUR THERMIQUE POUR SYSTEME DE STOCKAGE THERMIQUE**
WÄRMETAUSCHER FÜR THERMISCHES SPEICHERSYSTEM
HEAT EXCHANGER FOR THERMAL STORAGE SYSTEM

(30) Priorité: 08.10.2012 FR 1259562
(43) Date de publication de la demande: 12.08.2015
(73) Titulaire: Commissariat à l'Énergie Atomique et aux Énergies Alternatives, 75015 Paris (FR)
(72) Inventeur: OLCESE, Marco, F-73100 Aix Les Bains (FR)
(74) Mandataire: Brevalex
(86) Numéro de dépôt international: PCT/EP2013/070849
(87) Numéro de publication internationale: WO 2014/056857

(56) Documents cités:
- EP-A1- 2 333 472
- WO-A1-2011/157495
- DE-A1-102009 057 904
- DE-A1-102010 060 717
- GB-A- 847 218
- US-A- 4 624 242
- US-A1- 2011 226 780

## Description

### DOMAINE TECHNIQUE ET ART ANTÉRIEUR

La présente invention se rapporte à un échangeur thermique pour système de stockage thermique mettant en oeuvre un matériau à changement de phase.

La technologie solaire thermique à concentration consiste à utiliser le rayonnement solaire pour chauffer un fluide servant directement ou indirectement de source chaude dans un cycle thermodynamique. La concentration permet d'atteindre des températures plus ou moins élevées et ainsi de bénéficier de rendements de conversion thermodynamiques plus ou moins importants.

Afin de rendre très intéressante l'exploitation des centrales solaires thermodynamiques à concentration pour production de puissance électrique, il est requis de disposer de systèmes de stockage thermique à haute température destinés à stocker l'énergie thermique excédentaire et de la rendre disponible par exemple lors d'une baisse de l'ensoleillement.

Les centrales solaires à génération directe de vapeur ont été mises au point, celles-ci produisent de la vapeur qui est envoyée à une turbine qui produit alors de l'électricité. Lorsque le débit de vapeur produite est supérieur au débit nominal de la turbine, la quantité de vapeur en excès est stockée dans un système de stockage thermique. Lorsque le débit de vapeur produite est inférieur au débit nominal de la turbine, la vapeur est déstockée pour alimenter la turbine.

Les systèmes de stockage thermiques qui apparaissent particulièrement intéressants mettent en oeuvre les matériaux à changement de phase pour stocker et déstocker la chaleur. Les systèmes de stockage direct considéré ici comportent un faisceau de tubes dans lesquels circule le caloporteur, les tubes traversant le matériau à changement de phase, de la chaleur latente est échangée entre le fluide caloporteur et le matériau à changement de phase. Les tubes présentent des ailettes pour augmenter la surface d'échange.

Les matériaux à changement de phase, grâce au fait que l'énergie est stockée dans le matériau sous forme de chaleur latente, permettent d'échanger des grandes quantités d'énergie à une température presque constante. Ceci est un élément particulièrement important quand on doit stocker l'énergie latente du fluide caloporteur, par exemple de l'eau, car l'échange de chaleur entre deux fluides qui changent de phase à des températures proches permet d'augmenter sensiblement l'efficacité du cycle de stockage.

Or, les matériaux à changement de phase ont pour inconvénient de présenter une faible conductivité thermique, par exemple dans le cas du NaNO₃ sa conductivité thermique moyenne est de l'ordre de 0,5 W/mK, valeur typique des matériaux faiblement conducteurs voir thermiquement isolant.

La faible conductivité thermique des matériaux à changement de phase est un facteur ayant un impact majeur sur les coûts et les performances de l'échangeur, car, la plupart des échanges thermiques fluide caloporteur- matériaux à changement de phase se font principalement par conduction, en phase solide, ce qui implique une épaisseur maximale de matériau à changement de phase faible pour ne pas réduire l'efficacité de l'échange, l'épaisseur maximale est de l'ordre de 10 mm à 20 mm pour le NaNO₃. Avec des épaisseurs de cet ordre de grandeur, les échangeurs doivent présenter une très grande surface d'échange dans le cas de l'utilisation d'un matériau à changement de phase à l'état pur.

Or, dans le cas des systèmes de stockage à matériau à changement de phase, le fluide caloporteur est à haute pression. Par conséquent, pour des raisons de prix de revient, il est préférable de réduire le nombre de tubes de l'échangeur. Ce qui s'oppose à la mise en oeuvre de très grandes surfaces d'échange thermique.

Afin d'améliorer la conductivité du matériau à changement de phase, il a été proposé de disperser dans le matériau à changement de phase des structures métalliques. Mais le problème se pose de la stabilité de la dispersion aux cycles thermiques, mais surtout, le problème de la gestion du contact thermique entre la matrice de matériau à changement de phase et les tubes du fluide caloporteur.

Afin d'augmenter la surface d'échange thermique entre les tubes et le matériau à changement de phase des ailettes sont rapportées sur la surface extérieure du tube. Deux géométries d'ailettes sont utilisées, les ailettes s'étendant radialement et les ailettes s'étendant longitudinalement le long du tube.

En outre, il a été constaté que la réalisation de tubes en acier et d'ailettes en aluminium convenait d'un point de vue technique puisque la tenue aux hautes pression du fluide caloporteur circulant dans les tubes était assuré tout en offrant un prix de revient réduit par apport à des tubes et ailettes complètement en acier. Les ailettes sont alors rapportées sur le tube, un bon contact doit être assuré pour obtenir des échanges thermiques efficaces. En revanche, du fait de la mise en oeuvre de deux matériaux différents, il existe une dilatation différentielle entre les deux matériaux qui ont un coefficient de dilatation thermique sensiblement différent.

Par ailleurs, le changement de volume du matériau à changement de phase pendant le changement de phase a une action mécanique sur les ailettes. Ce changement de volume est de l'ordre de 11 % pour le NaNO₃.

L'effet de la dilatation différentielle et du changement du volume du matériau à changement de phase peut avoir un impact important sur la fiabilité du contact thermique entre le tube et les ailettes et la durabilité thermomécanique de l'ensemble.

Comme mentionné ci-dessus, il existe des ailettes longitudinales. Celles-ci sont intéressantes pour l'application dans un échangeur thermique à matériau à changement de phase car elles permettent une compensation plus aisée des changements de volume du matériau à changement de phase suite au changement de phase.

Le tube est en général serti à l'intérieur de profils extrudés en aluminium formant les ailettes longitudinales. Or cette structure est très sensible aux effets de la dilatation différentielle entre les deux matériaux. La durée de vie des tubes à ailettes longitudinales est alors réduite.

Dans le cas des tubes à ailettes radiales, par exemple les ailettes sont serties sur le tube par olivage ou les ailettes sont extrudés radialement, ces tubes présentent des limites au niveau de la température d'utilisation.

Il existe des tubes munies d'ailettes radiales qui sont en fait spiralées autour du tube et encastrées à leur base, ces ailettes sont désignées ailettes de type G. cette structure permet une utilisation des températures élevées de fonctionnement, par exemple jusqu'à 400-450°C et présente un moindre risque de désolidarisation. En revanche, le rapport entre le diamètre extérieur des ailettes et le diamètre du tube est limité, ce qui engendre le recours à un nombre des tubes très élevé pour avoir une surface d'échange suffisante. Les coûts de revient sont donc conséquents.

Le document US 4,624,242 divulgue un échangeur thermique pour système de stockage thermique selon le préambule de la revendication 1.

### EXPOSÉ DE L'INVENTION

C'est par conséquent un but de la présente invention d'offrir un échangeur thermique pour système de stockage thermique offrant une tenue mécanique à des températures élevées, tout en offrant un prix de revient réduit, par rapport aux systèmes de stockage existants.

Le but de la présente invention est atteint par un échangeur thermique selon la revendication 1, qui comporte un réservoir traversé par au moins un tube muni d'ailettes dans lequel est destiné à circuler un caloporteur, et au moins un insert définissant un logement pour le tube de sorte que le tube muni d'ailettes soit reçu avec jeu dans ledit logement, ledit insert formant un réseau assurant une conduction et une collecte de la chaleur.

Dans un exemple particulier, le réservoir de l'échangeur thermique est destiné à contenir un matériau à changement de phase, de sorte que le réseau formé par l'insert assure une conduction et une collecte de la chaleur dans le matériau à changement de phase situé entre deux tubes.

Dans un exemple de réalisation, les inserts sont configurés de sorte que l'association de plusieurs inserts adjacents définit le logement pour le tube.

Dans un autre exemple de réalisation, chaque insert comporte un logement pour un tube. Ainsi chaque insert entoure entièrement un tube.

En d'autres termes, l'invention met en oeuvre des éléments conducteurs thermiques entre et autour des tubes qui réalisent à la fois une augmentation de la surface d'échange thermique entre le tube et le matériau à changement de phase et une augmentation de la conductivité thermique équivalente du matériau à changement de phase. En effet, les éléments conducteur présentent une grande surface et forment une prolongation des ailettes fixées au tube, sans toutefois être en contact mécanique avec celles-ci, au moins en fonctionnement normal.

Par ailleurs, ces éléments conducteurs étant répartis dans tout le matériau à changement de phase situé entre les tubes, ils peuvent être considérés comme un ajout d'un matériau conducteur thermique au sein de celui-ci, selon une répartition discrète.

Dans un exemple particulièrement intéressant, les ailettes fixées aux tubes sont radiales et les inserts forment des ailettes longitudinales. D'une part, l'invention pallie au diamètre réduit des ailettes radiales en utilisant des inserts entre les tubes qui augmentent la surface d'échange thermique. D'autre part, l'invention pallie la faible tenue à la dilatation différentielle des tubes à ailettes longitudinales en rendant les ailettes longitudinales indépendantes mécaniquement des tubes. En outre, les inserts assurent une compensation plus aisée des changements de volume du matériau à changement de phase suite au changement de phase.

En outre, les inserts délimitant des logements pour les tubes, ils forment également des moyens de guidage des tube, ce qui permet de simplifier la structure par ailleurs et d'en réduire le coût.

De manière en plus avantageuse, les tubes sont des tubes à ailettes de type G qui offrent une excellente résistance à la dilatation différentielle tube-ailettes.

Le coût de fabrication de tels tubes étant réduit, le coût du système s'en trouve réduit.

La présente invention a alors pour objet un échangeur thermique pour système de stockage thermique comportant une enveloppe, au moins un tube dans lequel est destiné à circuler un caloporteur, ledit tube étant muni d' une surface extérieure du tube portant des ailettes d'échange thermique, ledit échangeur thermique comportant également au moins un insert en matériau conducteur thermique disposé autour dudit tube, ledit insert comportant au moins un logement pour recevoir avec jeu au moins en partie le tube muni d'ailettes, ledit insert comportant un assemblage de branches en matériau conducteur thermique de sorte à former un réseau de distribution et de collecte de chaleur.

De préférence, l'assemblage de branches comporte des branches s'étendant radialement autour du tube.

Le tube peut présenter un axe longitudinal, les branches pouvant alors s'étendre suivant des plans parallèles à l'axe du tube.

L'insert a avantageusement sensiblement la forme d'un cylindre d'axe confondu avec l'axe du tube qu'il entoure.

Dans un mode de réalisation, l'insert peut être réalisé d'un seul tenant.

De préférence, l'échangeur thermique comporte des moyens de positionnement sur sa périphérie extérieure coopérant avec des moyens de positionnement d'un insert voisin.

Dans un autre mode de réalisation, l'insert comporte plusieurs portions d'insert. L'insert peut alors par exemple comporter six portions d'insert, chaque portion d'insert participant à la délimitation de trois logements, lesdites portions d'inserts étant en appui plan contre trois inserts voisins.

Dans un exemple de réalisation, chaque portion d'insert a sensiblement la forme d'un prisme, les arêtes du prisme étant évidées de sorte à présenter un profil concave formant une portion de la paroi d'un logement.

De manière préférée, les branches comportent des ailettes.

Les ailettes des tubes sont de manière préférée des ailettes s'étendant sensiblement transversalement par rapport à l'axe longitudinal du tube. De manière encore préférée, les ailettes des tubes sont des ailettes de type G.

Selon une caractéristique de l'invention, l'insert ou les portions d'insert peuvent être réalisés par extrusion. Par exemple, l'insert ou les portions d'insert sont en aluminium.

Quant au tube et aux ailettes, le tube peut être réalisé en acier et les ailettes fixées sur le tube peuvent être en aluminium.

De préférence, l'échangeur thermique comporte plusieurs tubes parallèles reçus dans plusieurs inserts ou plusieurs portions d'inserts.

La présente invention a également pour objet un système de stockage thermique comportant un échangeur thermique selon l'invention et un matériau à changement de phase contenu dans l'enveloppe et entourant et entrant en contact avec ledit au moins un tube et ledit au moins un insert. Le matériau à changement de phase peut être est du NaNO₃, une paraffine ou de l'eau.

La présente invention a également pour objet une centrale solaire à concentration comportant un champ solaire dans lequel le caloporteur est échauffé et au moins un système de stockage thermique selon la présente invention, connecté en sortie du champ solaire.

La centrale solaire est par exemple une centrale solaire à génération directe de vapeur, le champ solaire générant un caloporteur sous forme vapeur.

### BRÈVE DESCRIPTION DES DESSINS

La présente invention sera mieux comprise à l'aide de la description qui va suivre et des dessins en annexes sur lesquels :
- la figure 1 est une vue de dessus d'un ensemble d'inserts selon un exemple de réalisation,
- la figure 2A est une vue de dessus d'un insert seul de l'ensemble de la figure 1,
- la figure 2B est une vue en perspective de l'insert de la figure 2A;
- la figure 3 est une vue de dessus d'un ensemble d'inserts selon un autre exemple de réalisation,
- la figure 4 est une vue de dessus d'un insert seul de l'ensemble de la figure 3,
- la figure 5 représente schématiquement l'évolution du front de fusion dans un matériau à changement de phase contenu dans un système de stockage thermique comportant des inserts de la figure 1,
- la figure 6 est une représentation graphique de la différence de température entre la température du fluide et la température de changement de phase en fonction du temps dans le cas d'un système de stockage thermique comportant des inserts de la figure 1,
- la figure 7 est une vue en coupe transversale d'un exemple de réalisation d'un système de stockage thermique comportant des inserts selon la figure 1.

### EXPOSÉ DÉTAILLÉ DE MODES DE RÉALISATION PARTICULIERS

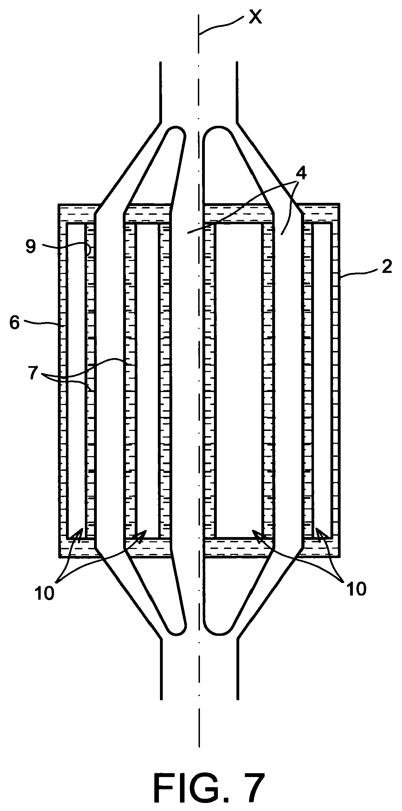

Sur la figure 7, on peut voir représenté schématiquement un exemple de réalisation d'un système de stockage thermique selon la présente invention.

Le système de stockage thermique comporte un échangeur thermique et soit un matériau à changement de phase, le stockage étant alors un stockage par chaleur latent, soit un caloporteur stockant de la chaleur sans changement de phase, le stockage étant alors un stockage par chaleur sensible.

L'échangeur thermique comporte une virole 2 d'axe longitudinal X traversée par des tubes 4 s'étendant parallèlement à l'axe longitudinal X et connectées en entrée et en sortie à un circuit de circulation d'un caloporteur. La virole 2 est destinée à être remplie d'un matériau à changement de phase 6 qui entoure et est en contact avec la surface extérieure des tubes 4.

Le caloporteur peut par exemple être de l'eau sous forme vapeur générée par une centrale solaire à génération directe de vapeur, le caloporteur cédant sa chaleur au matériau à changement de phase ou alors de l'eau sous forme liquide que l'on souhaite transformer en vapeur pour alimenter une turbine, c'est alors le matériau à changement de phase qui cède de la chaleur au caloporteur. Le caloporteur peut être un gaz ou liquide.

Le matériau à changement de phase particulièrement adapté aux centrales solaires présente une température de changement de phase comprise dans la gamme de température 250-350°C, qui est la gamme typique de températures de fonctionnement des centrales solaires à concentration. Par exemple, il s'agit des sels purs ou des mélanges de sels. Le nitrate de sodium (NaNO₃) est un sel pur appartenant à cette famille, il présente une température de changement de phase de 307°C. On peut aussi envisager d'utiliser comme matériau à changement de phase, des paraffines ou de l'eau, lorsque les températures de fonctionnement sont plus basses.

Dans cet exemple, le caloporteur circulant dans les tubes traverse une seule fois le matériau à changement de phase, les échanges thermiques ayant lieu pendant ce passage. Un système de stockage dans lequel le caloporteur circule plusieurs fois dans le matériau à changement de phase et échange la chaleur lors de plusieurs passages ne sort pas, du cadre de la présente invention. En outre, les tubes peuvent être orientés horizontalement et/ou l'axe de la virole peut être disposé horizontalement. En outre le réservoir peut avoir une autre forme, par exemple parallélépipédique.

Les tubes 4 sont munis d'ailettes 7, dans l'exemple représenté il s'agit d'ailettes radiales. Les ailettes peuvent être réalisées séparément et fixées sur la surface extérieure du tube ou être formées d'un seul tenant avec le tube

En outre, l'échangeur thermique comporte un ou des inserts 10 conducteurs thermiques disposés entre les tubes 4 et autour des tubes 4 de sorte à former un réseau conducteur thermique à travers le volume de matériau à changement de phase 6. Les inserts 10 délimitent des logements longitudinaux 9 pour les tubes.

Les tubes 4 munies des ailettes 7 sont reçus avec jeu dans les logements délimités par les inserts 10 pour permettre les dilatations thermiques.

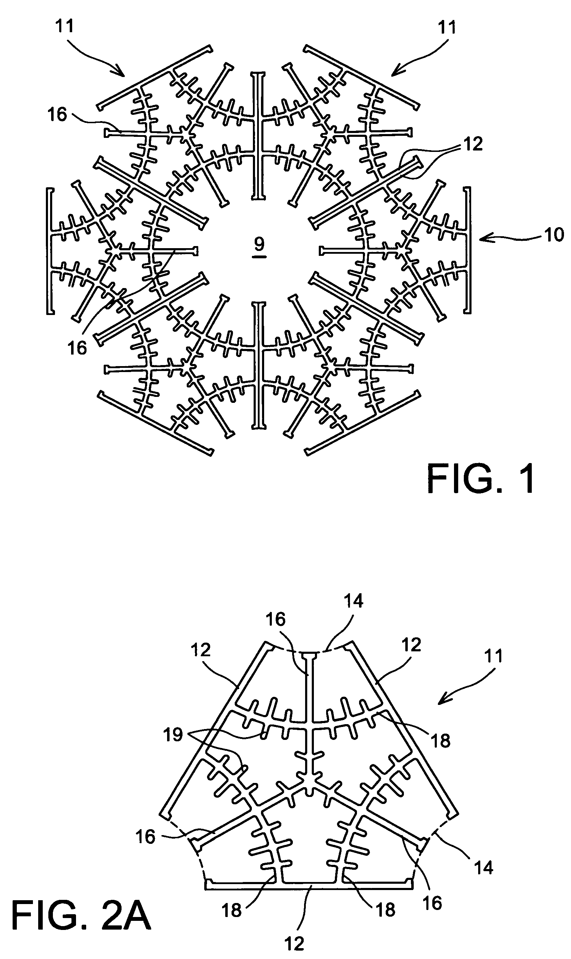

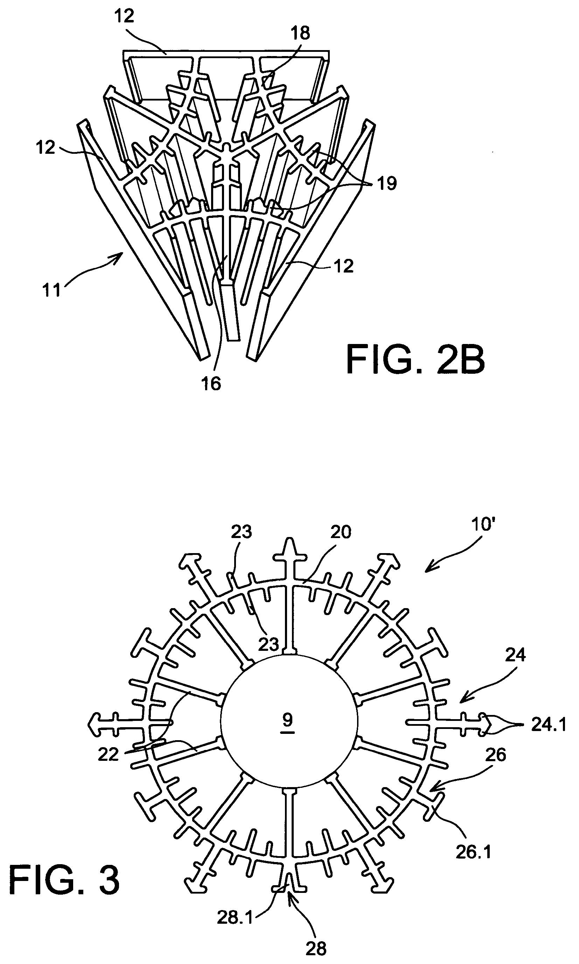

Sur les figures 1 et 2, on peut voir en vue de dessus un exemple de réalisation d'inserts pouvant être mis en oeuvre dans le système de stockage thermique de la figure 7.

Dans cet exemple de réalisation, un insert 10 comporte plusieurs portions d'inserts 11 qui, assemblés, forment l'insert 10.

Le profil général extérieur d'une portion d'insert 11 selon une coupe transversale est formé à partir d'un triangle équilatéral dont les sommets ont été coupés par des arcs de cercle de sorte que la portion d'insert soit formée de trois bords droits 12 de même longueur et que les zones de raccordement entre les bords droits 12 soient des surfaces à arcs de cercles concaves 14 représentées en pointillés, celles-ci n'existant pas physiquement dans l'exemple représenté. Les zones de raccordement 14 sont alors ouvertes. La portion d'insert comporte des branches internes 16 qui seront décrites ci-dessous. Les branches 16 ont un bord d'extrémité situé au niveau de la zone de raccordement.

Le fait que la zone 14 d'interface avec le tube soit ouverte permet une communication directe entre le volume à l'intérieur de la portion d'insert et le volume dans la partie extérieure de la portion d'insert et donc avantageusement une compensation plus aisée des contraintes mécaniques dérivants des changements de volume du matériau à changement de phase.

Sur la figure 1, six portions d'insert 11 sont assemblés bord à bord de sorte à former un hexagone dont la partie centrale délimite un logement cylindrique à section circulaire pour longer un tube 4. Dans l'exemple représenté, chaque portion d'insert 11 participe à la délimitation de trois logements. Chaque arc de cercle concave 14 délimite 1/6^{ème} de la circonférence d'un logement 9.

Les portions d'insert 11 s'étendent selon une direction perpendiculaire au plan de la feuille dans la représentation des figures 1 et 2. Chaque portion d'insert 10 a alors sensiblement la forme d'un prisme à base triangulaire comme on peut le voir représenté en perspective sur la figure 2B.

Les portions d'inserts 11 comportent une structure interne formée de trois branches droites 16 se superposant aux bissectrices du triangle équilatéral et connectées les unes aux autres au centre de symétrie du triangle, et trois branches courbes 18 en forme d'arc de cercle centrées sur les arcs de cercle 14 et reliant deux bords droits 12. Les branches droites 16 sont connectées aux branches courbes 18.

Avantageusement des ailettes 19 s'étendent de part et d'autre des branches 18, augmentant encore la surface d'échange thermique.

La disposition des branches 16 et 18 est choisie de telle sorte que, lorsque l'on considère l'insert de la figure 1, les branches 16 s'étendent radialement à partir de la paroi virtuelle du logement 9 du tube, et les branches courbes 18 délimitent une enveloppe périphérique portant des ailettes 19 s'étendant radialement. Ainsi grâce cette disposition, on obtient un réseau d'échange thermique assurant une distribution et une collecte de chaleur quasi symétrique dans le matériau à changement de phase entourant les tubes 4 et symétrique autour des tubes 4.

Les inserts dans la périphérie de l'échangeur ont une forme adaptée.

Les inserts sont par exemple réalisés en alliage d'aluminium par extrusion. De tels inserts peuvent être utilisés jusqu'à des températures de l'ordre de 500°C tout en conservant une résistance mécanique élevée.

Les tubes 4 sont par exemple réalisés en acier et les ailettes 7 sont en aluminium. Les ailettes peuvent s'étendre longitudinalement le long de la surface extérieure des tubes. De manière avantageuse, il s'agit d'ailettes radiales, de manière encore plus avantageuse, il s'agit d'ailettes radiales de type G.

On entend par "ailettes radiales", des ailettes qui s'étendent transversalement par rapport à l'axe longitudinal du tube 4, à l'inverse des ailettes longitudinales qui s'étendent parallèlement à l'axe longitudinal du tube.

Un tube muni d'ailettes de type G est par exemple réalisé de la manière suivante. Une bande d'ailette est enroulée dans une rainure usinée dans la surface extérieure du tube et est encastrée dans la rainure par épaulement du matériau du tube de base. Le tube est alors muni d'une seule ailette hélicoïdale entourant le tube sur une partie au moins de sa longueur. Cela permet de maintenir un transfert de chaleur maximal à des températures élevées du tube. En outre, le risques de désolidarisation entre les ailettes et le tube sont réduits. Ce type de tube est insensible aux dilatations différentielles puisque la dilation augmente le sertissage et donc à la fois le maintien mécanique et les échanges thermiques. Par exemple, les ailettes présentent une faible épaisseur, par exemple au plus 0,5 mm et à pas très serré de l'ordre de 3,6 mm.

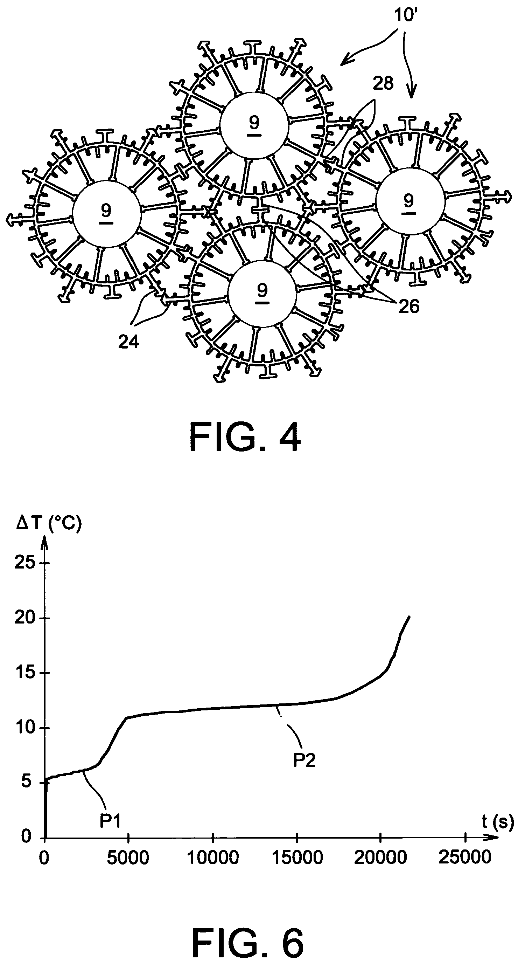

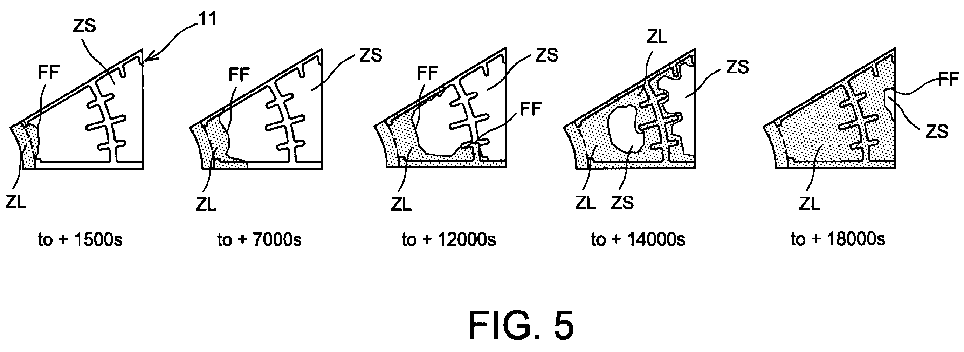

Sur la figure 5, on peut voir l'avancée du front de fusion pendant une phase de charge à travers un insert de la figure 2A et sur la figure 6 est représentée graphiquement l'évolution de la différence de température ΔT en °C entre la température du fluide dans le tube et la température de changement de phase en fonction du temps t en seconde dans le cas d'un système de stockage thermique comportant des inserts des figures 1 et 2. La température du fluide circulant dans le tube est la température moyenne du fluide dans le tube.

Sur la figure 5, la zone la plus sombre désignée ZL est la zone de matériau à changement de phase à l'état liquide et la zone la plus claire désignée ZS est la zone de matériau à changement de phase à l'état solide, le front de fusion FF est la limite entre les zones ZL et ZS.

A t0 + 1500 s, la zone ZL est uniquement à proximité du tube entre les ailettes radiales.

A t0 + 7000 s, la zone ZL s'étend le long de la structure de l'insert. Cette avancée du front de fusion le long de la structure de l'insert peut s'observer à t0 + 12000 s et à t0 + 14000 s. En effet, l'insert conduit mieux la chaleur que le matériau à changement de phase qui présente une faible conductivité thermique. Au temps t0 + 14000 s, on observe la fusion du matériau à changement de phase à proximité des branches de l'insert, montrant la conduction de la chaleur par l'insert.

A t0 + 18000 s, la zone ZS située à l'intérieur de l'insert a disparu. Tout le matériau à changement de phase est sous forme liquide.

Le graphique de la figure 6 a été tracé en considérant un tube de diamètre 1"1/2 (environ 38 mm) aves des ailettes radiales de types G de diamètre extérieur de 70 mm et un pas entre les tubes de 152 mm.

Les figures 5 et 6 concernent une simulation à flux de chaleur constant, i.e. débit de vapeur constant, dans laquelle le matériau à changement de phase est du NaNO3. La température du fluide caloporteur à l'entrée de l'échangeur est comprise dans l'intervalle 315-320°C.

On constate la présence de deux plateaux. Le premier plateau P1 correspond à la phase où le front de fusion se trouve au niveau des ailettes radiales.

Le plateau P2 correspond à la phase où le front de fusion se trouve dans l'insert (t0 + 7000 s). La phase à forte pente entre P1 et P2 correspond au franchissement de la zone entre les ailettes radiales et l'insert qui requiert une augmentation significative de la température à cause de la résistance thermique concentrée dans la couche de matériau à changement de phase à l'interstice tube-insert.

La présence du deuxième plateau P2 sur une longue période démontre que la mise en oeuvre d'inserts selon la présente invention permet d'atteindre une performance thermique constante pendant la plus grande partie du stockage, assurant un transfert thermique efficace du fluide circulant dans les tubes vers le matériau à changement de phase, et inversement en phase de décharge, ce qui est particulièrement avantageux pour le fonctionnement de la boucle de puissance.

Nous avons décrit une phase de stockage de chaleur dans le système. Lorsque l'on souhaite récupérer cette chaleur par exemple dans le cas d'une baisse de l'ensoleillement, la chaleur est déstockée. Pour cela le caloporteur circulant dans les tubes 4 est à une température inférieure à la température de changement de phase du matériau à changement de phase, les inserts collectent alors la chaleur stockée dans le matériau à changement de phase pour la conduire jusqu'au tube et au caloporteur. Le matériau à changement de phase autour des tube, en cédant sa chaleur au caloporteur, passe en premier de l'état liquide à l'état solide, c'est ensuite le matériau à proximité des branches qui passe de l'état liquide à l'état solide. Ensuite par conduction, le matériau situé entre les branches des inserts passe de l'état liquide à l'état solide.

Grâce à l'invention, l'assemblage est simplifié puisqu'un bon contact thermique entre les inserts et les tubes à ailettes n'est pas requis, en effet l'interface tubes à ailettes - inserts se situe dans une zone où le flux thermique est beaucoup moins important par rapport à celui au niveau de la surface extérieure du tube. Il n'est donc pas nécessaire d'assurer un échange thermique rapide. Un espacement de l'ordre de quelques pourcents de la dimension caractéristique est acceptable. Pour un système tube-insert avec un diamètre extérieur des ailettes de 70 mm et un pas des tubes de 152 mm, l'espacement nécessaire est de l'ordre de 1 mm.

La mise en oeuvre d'inserts présentant une structure longitudinale permet le changement de volume du matériau à changement de phase sans imposer des contraintes mécaniques intolérables sur la structure, et la mise en oeuvre d'ailettes dites radiales, et d'autant plus dans le cas d'ailettes de type G, permet de gérer efficacement la zone critique à flux de chaleur élevé.

En outre, la présence des inserts permet d'optimiser le nombre des tubes de l'échangeur et leur disposition indépendamment des dimensions des tubes à ailettes et en même temps d'optimiser la courbe des performances en fonction du taux d'avancement du front de changement de phase dans l'échangeur

La mise en oeuvre d'inserts présente l'avantage d'offrir un système de guidage naturel de tubes du faisceau de l'échangeur et permet donc de simplifier son assemblage et de réduire son coût

Par ailleurs, l'utilisation d'inserts selon la présente invention permet de définir des premières zones dans les logements 9 entre les tubes à ailettes et les inserts 10 et des deuxièmes zones en dehors des logements 9, formant alors un système de stockage thermique à « deux vitesses » :
- les premières zones sont alors sollicitées pour le charge et décharge de courte durée avec peu d'énergie disponible, par exemple en période hivernale lorsque la source de fluide chaude est formée par une centrale solaire. Ce sont les zones les plus efficaces. Le fait de pouvoir stocker peu d'énergie dans une partie de l'échangeur avec une meilleure efficacité est un avantage. En outre, une zone à efficacité accrue permet de gérer de manière plus performante des transitoires nuageux ;
- les deuxièmes zones sont sollicitées par des charges supérieures à un certain seuil et permet globalement d'optimiser séparément le rapport prestation/coût de l'échangeur. La zone qui correspond au deuxième plateau peut être optimisée indépendamment de la zone à efficacité accru en cherchant le rapport optimum prestation/coût qui est fonction de la capacité de stockage et du profil d'utilisation de l'énergie stockée et adapté à chacune des cas.

Sur les figures 3 et 4, on peut voir un autre exemple d'insert 10'. Dans cet exemple de réalisation, l'insert 10' délimitant un logement 9 pour un tube est d'un seul tenant.

Il comporte une paroi cylindrique 20 coaxiale à l'axe longitudinal du logement et des branches radiales 22 s'étendant entre le logement et la paroi cylindrique 20. L'insert comporte des branches radiales 24 d'un premier type s'étendant à partir de la paroi cylindrique 20 vers l'extérieur, des branches radiales 26 d'un deuxième type s'étendant à partir de la paroi cylindrique 20 vers l'extérieur, et des branches radiales 28 d'un troisième type s'étendant à partir de la paroi cylindrique 20 vers l'extérieur. Avantageusement des ailettes 23 sont prévues sur les branches 20, 22, 24, 26, 28.

Les branches du premier type 24 comportent à leur extrémité libre deux faces inclinées 24.1 destinées chacune à venir en appui plan contre deux faces inclinées de deux branches d'un premier type de deux autres inserts.

Les branches du deuxième type 26 comportent à leur extrémité libre une face plane 26.1 destinée à venir en appui plan contre une face plane d'une branche d'un deuxième type d'un autre insert.

Les branches du troisième type 28 comportent à leur extrémité libre un connecteur femelle ou mâle 28.1 destiné à recevoir un connecteur mâle ou femelle d'une branche du troisième type d'un autre insert.

Dans l'exemple représenté, chaque insert 10' comporte une seule branche du troisième type 28.

Lors de l'assemblage de l'échangeur thermique les branches des premier 24, deuxième 26 et troisième 28 types coopèrent et assurent un auto-positionnement des inserts les uns par rapport aux autres.

Il sera compris que le nombre de branches 24, 26, 28 de chacun des types décrit n'est en aucun cas limitatif, ainsi que la forme de ces branches. On peut envisager d'autres formes assurant la fonction d'auto-positionnement.

L'insert des figures 3 et 4 est monté autour du tube avant l'assemblage du faisceau de tubes.

Cet insert présente l'avantage d'assurer un meilleur contrôle de l'espacement tube à ailettes - insert. En outre, le nombre pièces à assembler est sensiblement réduit par rapport à l'exemple de réalisation des figures 1 et 2.

Dans les exemples décrits, il a été considéré des tubes de section circulaire. Mais la présente invention peut s'appliquer à des conduits se toute section, par exemple carrée ou hexagonale, la forme des inserts ou portions d'insert est alors adaptée à la forme des tubes.

En outre, il sera compris que les deux exemples d'insert décrits ci-dessus ne sont pas limitatifs et que la présente invention porte sur la mise en oeuvre d'inserts conducteurs thermiques disposés entre les tubes délimitant autour deux un réseau de distribution et de collecte de la chaleur au sein du matériau à changement de phase.

Par exemple pour des facilités de manipulation l'insert de la figure 3 pourrait être formés en deux parties, chacun comportant la moitié du logement du tube, ou l'insert de la figure 1 pourrait comporte moins de portions d'insert, par exemple trois.

On pourrait également envisager d'associer des inserts d'un seul tenant de la figure 3 avec des inserts formés de deux ou plus portions d'insert.

Par ailleurs, on pourrait par exemple envisager un insert comportant plusieurs logements, voire un insert unique d'un seul tenant pour tous les tubes. Dans ce dernier cas, un tel insert serait désigné par "grillage métallique".

Les inserts, notamment ceux en aluminium, peuvent être extrudés sur des grandes longueurs, voir sur toute la longueur des tubes, mais une dégradation progressive de tolérances de forme peut survenir. Pour pallier cet inconvénient, on peut avantageusement réaliser des assemblages tube inserts avec plusieurs modules d'inserts superposés à longueur réduite par tube, chaque module offrant une précision dimensionnelle plus élevée, permettant un meilleur couplage avec le tube et un assemblage plus facile.

L'épaisseur des branches des inserts est fonction de la longueur des branches-mêmes. A titre d'exemple, pour les inserts extrudés en aluminium de figure 2A et 4 avec un diamètre des ailettes de 70 mm et un pas des tubes de 152 mm, les épaisseurs des branches sont de l'ordre de 1,5-2,5 mm.

L'insert peut être réalisé en d'autres matériaux, mais l'aluminium qui permet une plus grande flexibilité dimensionnelle et le meilleur rapport performance/masse. On peut envisager de réaliser l'insert en plusieurs matériaux conducteurs.

Le système de stockage thermique selon l'invention est particulièrement adapté à une mise en oeuvre par exemple dans des centrales solaires à concentration, de manière encore plus avantageuse dans ses centrales solaires à génération directe de vapeur pour collecter la chaleur en excès et la libérer lors de périodes de production réduite de vapeur, par exemple lors d'un passage nuageux.

Le système de stockage selon l'invention peut être mis en oeuvre dans toute installation requérant un stockage de chaleur, par exemple pour dans des installations dans lesquelles on souhaite découpler la production de vapeur de son utilisation ou lisser la production de vapeur vis-à-vis de la production de vapeur, par exemple dans des systèmes d'incinération des déchets.

## Revendications

1. Echangeur thermique pour système de stockage thermique comportant une enveloppe (2), au moins un tube (4) dans lequel est destiné à circuler un caloporteur, ledit tube étant muni d' une surface extérieure du tube (4) portant des ailettes d'échange thermique (7), ledit échangeur thermique comportant également au moins un insert (10, 10') en matériau conducteur thermique disposé autour dudit tube (4), ledit insert (10, 10') comportant au moins un logement (9) pour recevoir au moins en partie le tube (4) muni d' ailettes (7), **caractérisé en ce que** ledit insert (10, 10') reçoit la partie du tube avec jeu et comporte un assemblage de branches (14, 16, 20, 22, 24, 26, 28) en matériau conducteur thermique de sorte à former un réseau de distribution et de collecte de chaleur.

2. Echangeur thermique selon la revendication 1, dans lequel l'assemblage de branches (12, 16, 20, 22, 24, 26, 28) comporte des branches s'étendant radialement autour du tube.

3. Echangeur thermique selon la revendication 1 ou 2, dans lequel le tube (4) présente un axe longitudinal, les branches s'étendant suivant des plans parallèles à l'axe du tube.

4. Echangeur thermique selon la revendication 1, 2 ou 3, dans lequel l'insert a sensiblement la forme d'un cylindre d'axe confondu avec l'axe du tube qu'il entoure.

5. Echangeur thermique selon l'un des revendications 1 à 4, dans lequel l'insert (10') est d'un seul tenant.

6. Echangeur thermique selon la revendication 5, dans lequel l'insert comporte des moyens de positionnement (24.1, 26.1, 28.1) sur sa périphérie extérieure coopérant avec des moyens de positionnement d'un insert (10') voisin.

7. Echangeur thermique selon l'une des revendications 1 à 4, dans lequel l'insert (10) comporte plusieurs portions d'insert (11).

8. Echangeur thermique selon la revendication 7, dans lequel l'insert (10) comporte six portions d'insert (11), chaque portion d'insert (11) participant à la délimitation de trois logements (9), lesdites portions d'inserts (11) étant en appui plan contre trois inserts (11) voisins, chaque portion d'insert (11) ayant avantageusement sensiblement la forme d'un prisme, les arêtes du prisme étant évidées de sorte à présenter un profil concave formant une portion de la paroi d'un logement (9).

9. Echangeur thermique selon l'une des revendications 1 à 8, dans lequel les branches (12, 16, 20, 22, 24, 26, 28) comportent des ailettes.

10. Echangeur thermique selon l'une des revendications 1 à 9, dans lequel les ailettes (7) des tubes sont des ailettes (7) s'étendant sensiblement transversalement par rapport à l'axe longitudinal du tube, lesdites ailettes (7) des tubes (4) étant des ailettes de type G.

11. Echangeur thermique selon l'une des revendications 1 à 10, dans lequel l'insert (10') ou les portions d'insert (11) sont réalisés par extrusion.

12. Echangeur thermique selon l'une des revendications 1 à 11, dans lequel l'insert (10') ou les portions d'insert (11) sont en aluminium et/ou le tube (4) est en acier et les ailettes (7) fixées sur le tube (4) sont en aluminium.

13. Echangeur thermique selon l'une des revendications 1 à 12, comportant plusieurs tubes (4) parallèles reçus dans plusieurs inserts (10') ou plusieurs portions d'inserts (11).

14. Système de stockage thermique comportant un échangeur thermique selon l'une des revendications 1 à 13 et un matériau à changement de phase (6) contenu dans l'enveloppe et entourant et entrant en contact avec ledit au moins un tube et ledit au moins un insert, le matériau à changement de phase (6) étant avantageusement du NaNO₃, une paraffine ou de l'eau.

15. Centrale solaire à concentration comportant un champ solaire dans lequel le caloporteur est échauffé et au moins un système de stockage thermique selon la revendication 14, connecté en sortie du champ solaire, la centrale solaire étant avantageusement une centrale solaire à génération directe de vapeur, le champ solaire générant un caloporteur sous forme vapeur.

## Patentansprüche

1. Wärmetauscher für ein Wärmespeichersystem, umfassend eine Hülle (2), wenigstens ein Rohr (4), in welchem ein Wärmeträger zirkulieren soll, wobei das Rohr mit einer Außenfläche des Rohrs (4) ausgestattet ist, welche Wärmeaustausch-Flügel (7) trägt, wobei der Wärmetauscher ebenfalls wenigstens einen Einsatz (10, 10') aus einem wärmeleitenden Material umfasst, der um das Rohr (4) herum angeordnet ist, wobei der Einsatz (10, 10') wenigstens eine Aufnahme (9) umfasst, um wenigstens teilweise das mit Flügeln (7) ausgestattete Rohr (4) aufzunehmen, **dadurch gekennzeichnet, dass** der Einsatz (10, 10') den Teil des Rohrs mit Spiel aufnimmt und eine Anordnung von Zweigen (14, 16, 20, 22, 24, 26, 28) aus einem wärmeleitenden Material umfasst, so dass ein Netz zur Verteilung und Sammlung von Wärme gebildet wird.

2. Wärmetauscher nach Anspruch 1, wobei die Anordnung von Zweigen (12, 16, 20, 22, 24, 26, 28) Zweige umfasst, die sich radial um das Rohr herum erstrecken.

3. Wärmetauscher nach Anspruch 1 oder 2, wobei das Rohr (4) eine Längsachse aufweist, wobei sich die Zweige entlang von Ebenen parallel zur Achse des Rohrs erstrecken.

4. Wärmetauscher nach Anspruch 1, 2 oder 3, wobei der Einsatz im Wesentlichen die Form von einem Zylinder aufweist, dessen Achse mit der Achse des Rohrs zusammenfällt, das er umgibt.

5. Wärmetauscher nach einem der Ansprüche 1 bis 4, wobei der Einsatz (10') einstückig ist.

6. Wärmetauscher nach Anspruch 5, wobei der Einsatz Positionierungsmittel (24.1, 26.1, 28.1) auf seinem Außenumfang umfasst, die mit Positionierungsmitteln eines benachbarten Einsatzes (10') zusammenwirken.

7. Wärmetauscher nach einem der Ansprüche 1 bis 4, wobei der Einsatz (10) mehrere Einsatzabschnitte (11) umfasst.

8. Wärmetauscher nach Anspruch 7, wobei der Einsatz (10) sechs Einsatzabschnitte (11) umfasst, wobei jeder Einsatzabschnitt (11) an der Abgrenzung von drei Aufnahmen (9) teilnimmt, wobei die Einsatzabschnitte (11) plan an drei benachbarten Einsätzen (11) anliegen, wobei jeder Einsatzabschnitt (11) bevorzugt im Wesentlichen die Form von einem Prisma aufweist, wobei die Kanten des Prismas ausgehöhlt sind, um ein konkaves Profil zu zeigen, welches einen Abschnitt der Wand von einer Aufnahme (9) bildet.

9. Wärmetauscher nach einem der Ansprüche 1 bis 8, wobei die Zweige (12, 16, 20, 22, 24, 26, 28) Flügel umfassen.

10. Wärmetauscher nach einem der Ansprüche 1 bis 9, wobei die Flügel (7) der Rohre Flügel (7) sind, die sich im Wesentlichen transversal in Bezug auf die Längsachse des Rohrs erstrecken, wobei die Flügel (7) der Rohre (4) Flügel vom Typ G sind.

11. Wärmetauscher nach einem der Ansprüche 1 bis 10, wobei der Einsatz (10') oder die Einsatzabschnitte (11) durch Extrusion hergestellt sind.

12. Wärmetauscher nach einem der Ansprüche 1 bis 11, wobei der Einsatz (10') oder die Einsatzabschnitte (11) aus Aluminium bestehen oder/und das Rohr (4) aus Stahl besteht und die an dem Rohr (4) befestigten Flügel (7) aus Aluminium bestehen.

13. Wärmetauscher nach einem der Ansprüche 1 bis 12, umfassend mehrere parallele Rohre (4), die in mehreren Einsätzen (10') oder mehreren Einsatzabschnitten (11) aufgenommen sind.

14. Wärmespeichersystem, umfassend einen Wärmetauscher nach einem der Ansprüche 1 bis 13 und ein Phasenwechselmaterial (6), welches in der Hülle enthalten ist und das wenigstens eine Rohr und den wenigstens einen Einsatz umgibt und in Kontakt damit tritt, wobei das Phasenwechselmaterial (6) vorzugsweise NaNO₃, ein Paraffin oder Wasser ist.

15. CSP-Solarkraftwerk, umfassend ein Solarfeld, in welchem der Wärmeträger erhitzt wird, und wenigstens ein Wärmespeichersystem nach Anspruch 14, angeschlossen am Ausgang des Solarfelds, wobei das Solarkraftwerk bevorzugt ein Solarkraftwerk mit direkter Dampferzeugung ist, wobei das Solarfeld einen Wärmeträger in Dampfform erzeugt.

## Claims

1. Heat exchanger for a thermal storage system comprising an envelope (2), at least one tube (4) inside which a heat transfer fluid circulates, said tube being provided with a tube (4) outside surface on which heat exchange fins (7) are fitted, said heat exchanger also comprising at least one insert (10, 10') made of a heat conducting material arranged around said tube (4), said insert (10, 10') comprising at least one housing (9) to at least partially hold the tube (4) with its fins (7), **characterized in that** said insert (10, 10') hold the part of the tube with clearance and comprises an assembly of branches (14, 16, 20, 22, 24, 26, 28) made of a heat conducting material, so as to form a heat distribution and collection network.

2. Heat exchanger according to claim 1, in which the assembly of branches (12, 16, 20, 22, 24, 26, 28) comprises branches extending radially around the tube.

3. Heat exchanger according to claim 1 or 2, in which the tube (4) has a longitudinal axis, the branches extend along planes parallel to the axis of the tube.

4. Heat exchanger according to claim 1, 2 or 3, in which the insert is approximately cylindrically shaped with an axis coincident with the axis of the tube that it surrounds.

5. Heat exchanger according to one of claims 1 to 4, in which the insert (10') is made of a single piece.

6. Heat exchanger according to claim 5, in which the insert comprises positioning means (24.1, 26.1, 28.1) around its external periphery cooperating with positioning means of an adjacent insert (10').

7. Heat exchanger according to one of claims 1 to 4, in which the insert (10) comprises several insert portions (11).

8. Heat exchanger according to claim 7, in which the insert (10) comprises six insert portions (11), each insert portion (11) participating in the delimitation of three housings (9), said insert portions (11) acting in plane bearing against three adjacent inserts (11), each insert portion (11) being advantageously approximately prism-shaped, the edges of the prism being recessed so as to present a concave profile forming a portion of the wall of a housing (9).

9. Heat exchanger according to one of claims 1 to 8, in which the branches (12, 16, 20, 22, 24, 26, 28) are fitted with fins.

10. Heat exchanger according to one of claims 1 to 9, in which the tube fins (7) are fins (7) extending approximately transverse to the longitudinal axis of the tube, said tube (4) fins (7) being type G fins.

11. Heat exchanger according to one of claims 1 to 10, in which the insert (10') or insert portions (11) are made by extrusion.

12. Heat exchanger according to one of claims 1 to 11, in which the insert (10') or insert portions (11) are made from aluminium and/or the tube (4) is made of steel and the fins (7) fixed onto the tube (4) are made of aluminium.

13. Heat exchanger according to one of claims 1 to 12, comprising several parallel tubes (4) that fit into several inserts (10') or several portions of inserts (11).

14. Thermal storage system comprising a heat exchanger according to one of claims 1 to 13 and a phase change material (6) contained in the envelope and surrounding and coming into contact with said at least one tube and said at least one insert, the phase change material (6) being advantageously NaNO₃, a paraffin or water.

15. Concentrating solar power plant comprising a solar field inside which the heat transfer fluid is heated and at least one thermal storage system according to claim 14, connected to the outlet of the solar field, the solar plant being advantageously a direct steam generation solar plant, the solar field generating a heat transfer fluid in the form of steam.
